# EUROPEAN PATENT SPECIFICATION

(11) **EP 3 099 134 B1**
(45) Date of publication and mention of the grant of the patent: **06.06.2018**
(21) Application number: 14883340.3
(22) Date of filing: 18.02.2014
(51) Int. Cl.: H04W 48/14, H04W 36/04, H04W 48/20, H04W 84/04

(54) **ACCESS SYSTEM, DEVICE AND METHOD**
ZUGANGSSYSTEM, -VORRICHTUNG UND -VERFAHREN
SYSTÈME, DISPOSITIF ET PROCÉDÉ D'ACCÈS

(43) Date of publication of application: 30.11.2016
(73) Proprietor: Huawei Technologies Co., Ltd., Longgang District Shenzhen, Guangdong 518129 (CN)
(72) Inventor: LI, Hong, Shenzhen Guangdong 518129 (CN); XIAO, Dengkun, Shenzhen Guangdong 518129 (CN)
(74) Representative: Pfenning, Meinig & Partner mbB
(86) International application number: PCT/CN2014/072171
(87) International publication number: WO 2015/123805

(56) References cited:
- WO-A2-2010/126344
- CN-A- 101 873 709
- CN-A- 102 143 528
- CN-A- 102 340 844
- US-A1- 2009 221 288
- "3rd Generation Partnership Project; Technical Specification Group Core Network and Terminals; Handover procedures (Release 11)", 3GPP STANDARD; 3GPP TS 23.009, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V11.2.0, 19 December 2012 (2012-12-19), pages 1-301, XP050691236, [retrieved on 2012-12-19]
- PANASONIC: "CP Architecture: Location of Security and RRM functions RBC, RAC", 3GPP DRAFT; R2-131681 CP ARCHITECTURE-LOCATION OF SECURITY AND RRM FUNCTIONS RBC, RAC, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG2, no. Fukuoka, Japan; 20130520 - 20130524 10 May 2013 (2013-05-10), XP050699828, Retrieved from the Internet: URL:http://www.3gpp.org/ftp/tsg_ran/WG2_RL 2/TSGR2_82/Docs/ [retrieved on 2013-05-10]

## Description

### TECHNICAL FIELD

The present invention relates to the field of communications technologies, and in particular, to an access system, a device, and a method.

### BACKGROUND

When user equipment (User Equipment, UE for short) requests to access a base station, the base station needs to make an admission decision to determine whether to allow the UE to access the base station. The admission decision plays an important role in avoiding traffic overload and ensuring system stability.

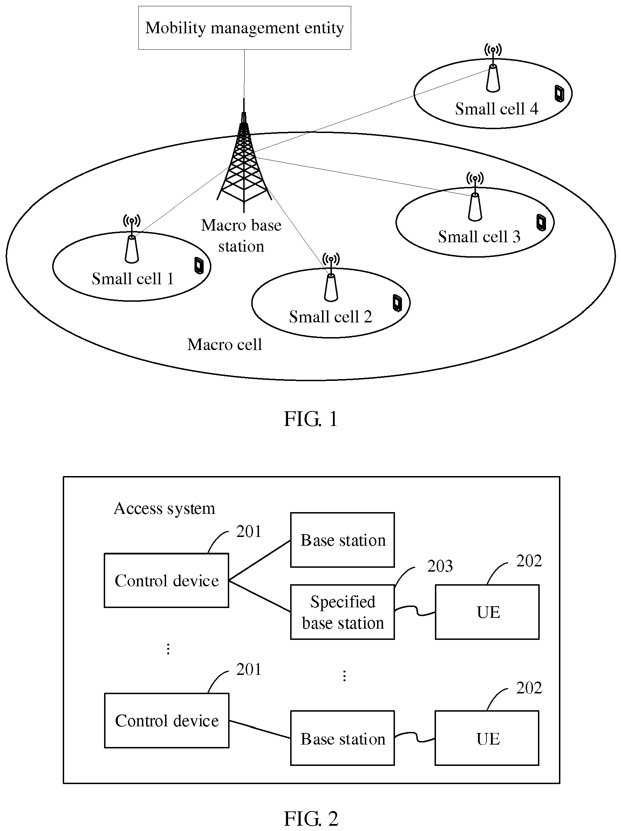

In addition, to enlarge a coverage range of a wireless network, coverage of many small cells (small cell) may be added to the existing wireless network, where a small-cell base station may be called a small cell. A small cell and a mobility management entity (or a core network) may be directly connected, or may be indirectly connected and separately connected to a macro base station, where the macro base station serves as an intermediate node between the small cell and the mobility management entity. A small cell may be overlapped with a macro cell, or may be isolated from the macro cell. For example, as shown in FIG. 1, a small cell 1, a small cell 2, and a small cell 3 are overlapped with a macro cell, a small cell 4 is isolated from the macro cell.

Because many small cells may be deployed in an area, multiple small cells exist in a form of cluster (Cluster) in different positions of a macro cell. If all the small cells are connected to the macro base station, the macro base station is connected to hundreds or even thousands of small cells, which brings an extremely high requirement for actual network deployment. Moreover, the macro base station needs to make an admission decision each time UE accesses the macro base station, causing tremendous data pressure to the macro base station, and affecting a service processing capability of the macro base station.

"3rd Generation Partnership Project; Technical Specification Group Core Network and Terminals; Handover procedures (Release 11)" (3GPP STANDARD; 3GPP TS 23.009, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20121219), vol. CT WG4, no. V11.2.0) discloses a process of directed retry which involves the assignment of a UE/MS to a radio channel on a cell other than the serving cell.

US2009221288A1 discloses a method for implementing a random access of a new access node and a system thereof, which belong to a wireless communication field, and enable the new access node within the coverage of relay stations to implement the random access. In the application, when the new access node is located within the coverage of the relay stations, each of the relay stations notifies an access request sent from the new access node to a synchronization station via a report message, and the synchronization station compares the access request forwarded by each of the relay stations and the access request received by itself from the same new access node, selects a station with the best signal quality of the received access request, and implements the access of the new access node in accordance with the types of selected station and the synchronization station itself.

### SUMMARY

To prevent a service processing capability of a macro base station from being affected when all small cells are connected to the macro base station, embodiments of the present invention provide an access system, a device, and a method according to the independent claims, where the technical solutions are as follows, wherein the further advantages can be achieved by the features disclosed in the dependent claims:

According to a first aspect, an access system is provided, where the system includes: at least one control device, at least one user equipment UE, and at least one base station, where the at least one base station includes a specified base station;
the control device is configured to receive an access request sent by the specified base station, where the access request carries an identifier and service information that are of UE that requests to access the specified base station;
the control device is further configured to determine, according to pre-acquired resource status information of each base station and the service
information, a target base station and a resource that the target base station should provide for the UE;
the control device is further configured to send an access response to the specified base station, where the access response carries the identifier of the UE, an identifier of the target base station, and the resource;
the specified base station is configured to forward the access response to the UE according to the identifier of the UE; and
the UE is configured to: when receiving the access response, access the target base station based on the identifier of the target base station and the resource that the target base station provides for the UE.

According to a second aspect, a control device is provided, where the control device includes: a receiver, a transmitter, a memory, and a processor, where the receiver, the transmitter, and the memory are separately connected to the processor, the memory stores program code, and the processor is configured to invoke the program code to execute the following operations:
receiving an access request sent by a specified base station, where the access request carries an identifier and service information that are of user equipment UE that requests to access the specified base station;
determining, according to pre-acquired resource status information of each base station and the service information, a target base station and a resource that the target base station should provide for the UE; and
sending an access response to the specified base station, where the access response carries the identifier of the UE, an identifier of the target base station, and the resource, so that the specified base station forwards the access response to the UE according to the identifier of the UE, and when receiving the access response, the UE accesses the target base station based on the identifier of the target base station and the resource that the target base station provides for the UE.

According to a third aspect, an access method is provided, where the method includes:
receiving, by a control device, an access request sent by a specified base station, where the access request carries an identifier and service information that are of user equipment UE that requests to access the specified base station;
determining, by the control device according to pre-acquired resource status information of each base station and the service information, a target base station and a resource that the target base station should provide for the UE; and
sending, by the control device, an access response to the specified base station, where the access response carries the identifier of the UE, an identifier of the target base station, and the resource, so that the specified base station forwards the access response to the UE according to the identifier of the UE, and when receiving the access response, the UE accesses the target base station based on the identifier of the target base station and the resource that the target base station provides for the UE.

With reference to the third aspect, in a first possible implementation manner of the third aspect, the determining, by the control device according to pre-acquired resource status information of each base station and the device information, a target base station and a resource that the target base station should provide for the UE includes:
determining, by the control device according to resource status information of the specified base station, whether the specified base station can provide a resource for the UE;
when the control device determines that the specified base station can provide a resource for the UE, determining the specified base station as the target base station, and determining the resource according to the resource status information of the specified base station and the device information; and
when the control device determines that the specified base station cannot provide a resource for the UE, determining, according to resource status information of another base station except the specified base station, a base station that can provide a resource for the UE as the target base station, and determining the resource according to the resource status information of the target base station and the device information.

With reference to the first possible implementation manner of the third aspect, in a second possible implementation manner of the third aspect, resource status information of a base station includes current load and a remaining resource volume, and the determining, by the control device according to resource status information of the specified base station, whether the specified base station can provide a resource for the UE includes:
determining, by the control device, whether current load of the specified base station is less than a first preset threshold, and when the current load of the specified base station is less than the first preset threshold, determining that the specified base station can provide a resource for the UE; or
determining, by the control device, whether a remaining resource volume of the specified base station is greater than a second preset threshold, and when the remaining resource volume of the specified base station is greater than the second preset threshold, determining that the specified base station can provide a resource for the UE.

With reference to the first possible implementation manner of the third aspect, in a third possible implementation manner of the third aspect, when the control device determines that the specified base station cannot provide a resource for the UE, the determining, according to resource status information of another base station except the specified base station, a base station that can provide a resource for the UE as the target base station includes:
when the control device determines that the specified base station cannot provide a resource for the UE, determining a base station with lowest current load in the another base station except the specified base station as the target base station; or
when the control device determines that the specified base station cannot provide a resource for the UE, determining a base station with a highest remaining resource volume in the another base station except the specified base station as the target base station.

With reference to the first possible implementation manner of the third aspect, in a fourth possible implementation manner of the third aspect, the sending, by the control device, an access response to the specified base station includes:
when the target base station is the specified base station, sending, by the control device, a first access response to the specified base station, where the first access response carries the identifier of the UE, the identifier of the specified base station, and the resource that the specified base station should provide for the UE, and the first access response is used to acknowledge the access request, so that the specified base station forwards the first access response to the UE according to the identifier of the UE, and when receiving the first access response, the UE accesses the specified base station based on the identifier of the specified base station and the resource that the specified base station provides for the UE; or
when the target base station is a first base station except the specified base station, sending, by the control device, a second access response to the specified base station, where the second access response carries the identifier of the UE, an identifier of the first base station, and a resource that the first base station should provide for the UE, so that the specified base station forwards the second access response to the UE according to the identifier of the UE, and when receiving the second access response, the UE accesses the first base station based on the identifier of the first base station and the resource that the first base station provides for the UE.

With reference to the third aspect, in a fifth possible implementation manner of the third aspect, after the determining, by the control device according to pre-acquired resource status information of each base station and the device information, a target base station and a resource that the target base station should provide for the UE, the method further includes:
scheduling, by the control device, a resource for the UE according to the resource that the target base station should provide for the UE.

With reference to the third aspect, in a sixth possible implementation manner of the third aspect, after the determining, by the control device according to pre-acquired resource status information of each base station and the device information, a target base station and a resource that the target base station should provide for the UE, the method further includes:
when the target base station is the specified base station, carrying a scheduling identifier in the first access response, so that when receiving the first access response, the specified base station schedules a resource for the UE according to the identifier of the UE and the resource that the specified base station should provide for the UE; or
when the target base station is the first base station, sending, by the control device, an access message to the first base station, where the access message carries the identifier of the UE and the resource, so that when receiving the access message, the first base station schedules a resource for the UE according to the identifier of the UE and the resource that the first base station should provide for the UE.

With reference to any one of the foregoing possible implementation manners, in a seventh possible implementation manner of the third aspect, the specified base station is a macro base station or a small cell.

With reference to the seventh possible implementation manner of the third aspect, in an eighth possible implementation manner of the third aspect, when the specified base station is the macro base station, before the receiving an access request sent by a specified base station, the method further includes:
when the macro base station receives an access request sent by the UE and determines, according to resource status information of the macro base station, that the macro base station cannot provide a resource for the UE, selecting a control device according to acquired resource status information of each base station pre-acquired by each control device, and sending the access request to the selected control device, where the selected control device executes a step of receiving the access request.

With reference to the seventh possible implementation manner of the third aspect, in a ninth possible implementation manner of the third aspect, the control device is located in a base station connected to the macro base station.

Beneficial effects of the technical solutions provided in the embodiments of the present invention are as follows:
According to the system, the device, and the method that are provided in the embodiments of the present invention, a control device is introduced, an interface between the control device and a base station is added, signaling between the control device and the base station is defined, an interaction process between the control device and the base station is designed, and the control device determines, according to resource status information of each base station and service information of UE, a target base station that the UE accesses and a resource that the target base station should provide for the UE, and can coordinate a resource of each base station, thereby increasing overall resource utilization, and improving quality of service and a system throughput. Moreover, because the control device has acquired the resource status information of each base station, interference caused by access of new UE can be avoided.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of coverage ranges of a macro cell and a small cell;
FIG. 2 is a schematic structural diagram of an access system according to an embodiment of the present invention;
FIG. 3 is a schematic structural diagram of a control device according to an embodiment of the present invention;
FIG. 4 is a flowchart of an access method according to an embodiment of the present invention;
FIG. 5 is a flowchart of an access method according to an embodiment of the present invention;
FIG. 6 is a flowchart of an access method according to an embodiment of the present invention;
FIG. 7 is a flowchart of an access method according to an embodiment of the present invention;
FIG. 8 is a flowchart of an access method according to an embodiment of the present invention;
FIG. 9 is a schematic diagram of coverage ranges of a macro base station and a small cell;
FIG. 10 is a schematic diagram of coverage ranges of a macro base station and a small cell; and
FIG. 11 is a schematic diagram of coverage ranges of a macro base station and a small cell.

### DESCRIPTION OF EMBODIMENTS

To make the objectives, technical solutions, and advantages of the present invention clearer, the following further describes the embodiments of the present invention in detail with reference to the accompanying drawings.

FIG. 2 is a schematic structural diagram of an access system according to an embodiment of the present invention. Referring to FIG. 2, the system includes: at least one control device 201, at least one UE 202, and at least one base station, where the at least one base station includes a specified base station 203.

The control device 201 is configured to receive an access request sent by the specified base station 203, where the access request carries an identifier and service information that are of UE 202 that requests to access the specified base station 203.

The control device 201 is further configured to determine, according to pre-acquired resource status information of each base station and the service information, a target base station and a resource that the target base station should provide for the UE 202.

The control device 201 is further configured to send an access response to the specified base station 203, where the access response carries the identifier of the UE 202, an identifier of the target base station, and the resource.

The specified base station 203 is configured to forward the access response to the UE 202 according to the identifier of the UE 202.

The UE 202 is configured to: when receiving the access response, access the target base station based on the identifier of the target base station and the resource that the target base station provides for the UE 202.

According to the system provided in this embodiment of the present invention, a control device is introduced, an interface between the control device and a base station is added, signaling between the control device and the base station is defined, an interaction process between the control device and the base station is designed, and the control device determines, according to resource status information of each base station and service information of UE, a target base station that the UE accesses and a resource that the target base station should provide for the UE, and can coordinate a resource of each base station, thereby increasing overall resource utilization, and improving quality of service and a system throughput. Moreover, because the control device has acquired the resource status information of each base station, interference caused by access of new UE can be avoided.

Optionally, the control device 201 is further configured to: when determining that the specified base station 203 can provide a resource for the UE 202, determine the specified base station 203 as the target base station, and determine the resource according to the resource status information of the specified base station 203 and the device information; and
the control device 201 is further configured to: when determining that the specified base station 203 cannot provide a resource for the UE 202, determine, according to resource status information of another base station except the specified base station 203, a base station that can provide a resource for the UE 202 as the target base station, and determine the resource according to the resource status information of the target base station and the device information.

Optionally, resource status information of a base station includes current load and a remaining resource volume, and the control device 201 is further configured to determine whether current load of the specified base station 203 is less than a first preset threshold, and when the current load of the specified base station 203 is less than the first preset threshold, determine that the specified base station 203 can provide a resource for the UE 202; or
the control device 201 is further configured to determine whether a remaining resource volume of the specified base station 203 is greater than a second preset threshold, and when the remaining resource volume of the specified base station 203 is greater than the second preset threshold, determine that the specified base station 203 can provide a resource for the UE 202.

Optionally, the control device 201 is further configured to: when determining that the specified base station 203 cannot provide a resource for the UE 202, determine a base station with lowest current load in the another base station except the specified base station 203 as the target base station; or
the control device 201 is further configured to: when determining that the specified base station 203 cannot provide a resource for the UE 202, determine a base station with a highest remaining resource volume in the another base station except the specified base station 203 as the target base station.

Optionally, the control device 201 is further configured to: when the target base station is the specified base station 203, send a first access response to the specified base station 203, where the first access response carries the identifier of the UE 202, the identifier of the specified base station 203, and the resource that the specified base station 203 should provide for the UE 202, and the first access response is used to acknowledge the access request, so that the specified base station 203 forwards the first access response to the UE 202 according to the identifier of the UE 202, and when receiving the first access response, the UE 202 accesses the specified base station 203 based on the identifier of the specified base station 203 and the resource that the specified base station 203 provides for the UE 202; or
the control device 201 is further configured to: when the target base station is a first base station except the specified base station 203, send a second access response to the specified base station 203, where the second access response carries the identifier of the UE 202, an identifier of the first base station, and a resource that the first base station should provide for the UE 202, so that the specified base station 203 forwards the second access response to the UE 202 according to the identifier of the UE 202, and when receiving the second access response, the UE 202 accesses the first base station based on the identifier of the first base station and the resource that the first base station provides for the UE 202.

Optionally, the control device 201 is further configured to schedule a resource for the UE 202 according to the resource that the target base station should provide for the UE 202.

Optionally, when the target base station is the specified base station 203, the first access response carries a scheduling identifier, so that when receiving the first access response, the specified base station 203 schedules a resource for the UE 202 according to the identifier of the UE 202 and the resource that the specified base station 203 should provide for the UE 202; or
when the target base station is the first base station, the control device 201 sends an access message to the first base station, where the access message carries the identifier of the UE 202 and the resource, so that when receiving the access message, the first base station schedules a resource for the UE 202 according to the identifier of the UE 202 and the resource that the first base station should provide for the UE 202.

Optionally, the specified base station 203 is a macro base station or a small cell.

Optionally, when the macro base station receives an access request sent by the UE 202 and determines, according to resource status information of the macro base station, that the macro base station cannot provide a resource for the UE 202, a control device 201 is selected according to acquired resource status information of each base station pre-acquired by each control device 201, and the access request is sent to the selected control device 201, where the selected control device 201 executes a step of receiving the access request.

Optionally, the control device 201 is located in a base station connected to the macro base station.

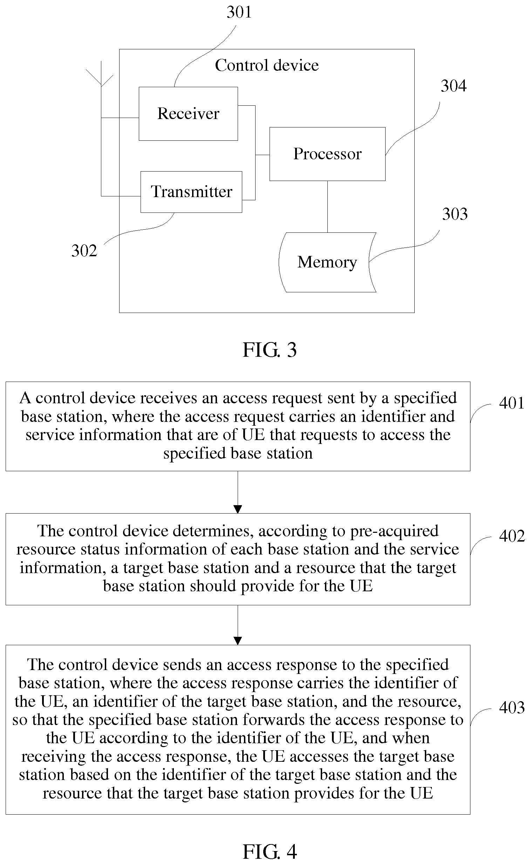

FIG. 3 is a schematic structural diagram of a control device according to an embodiment of the present invention. Referring to FIG. 3, the control device includes: a receiver 301, a transmitter 302, a memory 303, and a processor 304, where the receiver 301, the transmitter 302, and the memory 303 are separately connected to the processor 304, the memory 303 stores program code, and the processor 304 is configured to invoke the program code to execute the following operations:
receiving, by using the receiver 301, an access request sent by a specified base station, where the access request carries an identifier and service information that are of user equipment UE that requests to access the specified base station;
determining, according to pre-acquired resource status information of each base station and the service information, a target base station and a resource that the target base station should provide for the UE; and
sending an access response to the specified base station by using the transmitter 302, where the access response carries the identifier of the UE, an identifier of the target base station, and the resource, so that the specified base station forwards the access response to the UE according to the identifier of the UE, and when receiving the access response, the UE accesses the target base station based on the identifier of the target base station and the resource that the target base station provides for the UE.

According to the control device provided in this embodiment of the present invention, the control device is introduced, an interface between the control device and a base station is added, signaling between the control device and the base station is defined, an interaction process between the control device and the base station is designed, and the control device determines, according to resource status information of each base station and service information of UE, a target base station that the UE accesses and a resource that the target base station should provide for the UE, and can coordinate a resource of each base station, thereby increasing overall resource utilization, and improving quality of service and a system throughput. Moreover, because the control device has acquired the resource status information of each base station, interference caused by access of new UE can be avoided.

Optionally, the processor 304 is further configured to invoke the program code to execute the following operations:
when determining that the specified base station can provide a resource for the UE, determining the specified base station as the target base station, and determining the resource according to the resource status information of the specified base station and the device information; and
when determining that the specified base station cannot provide a resource for the UE, determining, according to resource status information of another base station except the specified base station, a base station that can provide a resource for the UE as the target base station, and determining the resource according to the resource status information of the target base station and the device information.

Optionally, resource status information of a base station includes current load and a remaining resource volume, and the processor 304 is further configured to invoke the program code to execute the following operations:
determining whether current load of the specified base station is less than a first preset threshold, and when the current load of the specified base station is less than the first preset threshold, determining that the specified base station can provide a resource for the UE; or
determining whether a remaining resource volume of the specified base station is greater than a second preset threshold, and when the remaining resource volume of the specified base station is greater than the second preset threshold, determining that the specified base station can provide a resource for the UE.

Optionally, the processor 304 is further configured to invoke the program code to execute the following operation:
when determining that the specified base station cannot provide a resource for the UE, determining a base station with lowest current load in the another base station except the specified base station as the target base station; or
when determining that the specified base station cannot provide a resource for the UE, determining a base station with a highest remaining resource volume in the another base station except the specified base station as the target base station.

Optionally, the processor 304 is further configured to invoke the program code to execute the following operations:
when the target base station is the specified base station, sending a first access response to the specified base station, where the first access response carries the identifier of the UE, the identifier of the specified base station, and the resource that the specified base station should provide for the UE, and the first access response is used to acknowledge the access request, so that the specified base station forwards the first access response to the UE according to the identifier of the UE, and when receiving the first access response, the UE accesses the specified base station based on the identifier of the specified base station and the resource that the specified base station provides for the UE; or
when the target base station is a first base station except the specified base station, sending a second access response to the specified base station, where the second access response carries the identifier of the UE, an identifier of the first base station, and a resource that the first base station should provide for the UE, so that the specified base station forwards the second access response to the UE according to the identifier of the UE, and when receiving the second access response, the UE accesses the first base station based on the identifier of the first base station and the resource that the first base station provides for the UE.

Optionally, the processor 304 is further configured to invoke the program code to execute the following operation:
scheduling a resource for the UE according to the resource that the target base station should provide for the UE.

Optionally, the processor 304 is further configured to invoke the program code to execute the following operation:
when the target base station is the specified base station, carrying a scheduling identifier in the first access response, so that when receiving the first access response, the specified base station schedules a resource for the UE according to the identifier of the UE and the resource that the specified base station should provide for the UE; or
when the target base station is the first base station, sending an access message to the first base station, where the access message carries the identifier of the UE and the resource, so that when receiving the access message, the first base station schedules a resource for the UE according to the identifier of the UE and the resource that the first base station should provide for the UE.

Optionally, the specified base station is a macro base station or a small cell.

Optionally, the processor 304 is further configured to invoke the program code to execute the following operations:
when the macro base station receives an access request sent by the UE and determines, according to resource status information of the macro base station, that the macro base station cannot provide a resource for the UE, selecting a control device according to acquired resource status information of each base station pre-acquired by each control device, and sending the access request to the selected control device, where the selected control device executes a step of receiving the access request.

Optionally, the control device is located in a base station connected to the macro base station.

FIG. 4 is a flowchart of an access method according to an embodiment of the present invention. Referring to FIG. 4, the method includes:
401. A control device receives an access request sent by a specified base station, where the access request carries an identifier and service information that are of UE that requests to access the specified base station.
402. The control device determines, according to pre-acquired resource status information of each base station and the service information, a target base station and a resource that the target base station should provide for the UE.
403. The control device sends an access response to the specified base station, where the access response carries the identifier of the UE, an identifier of the target base station, and the resource, so that the specified base station forwards the access response to the UE according to the identifier of the UE, and when receiving the access response, the UE accesses the target base station based on the identifier of the target base station and the resource that the target base station provides for the UE.

According to the method provided in this embodiment of the present invention, a control device is introduced, an interface between the control device and a base station is added, signaling between the control device and the base station is defined, an interaction process between the control device and the base station is designed, and the control device determines, according to resource status information of each base station and service information of UE, a target base station that the UE accesses and a resource that the target base station should provide for the UE, and can coordinate a resource of each base station, thereby increasing overall resource utilization, and improving quality of service and a system throughput.

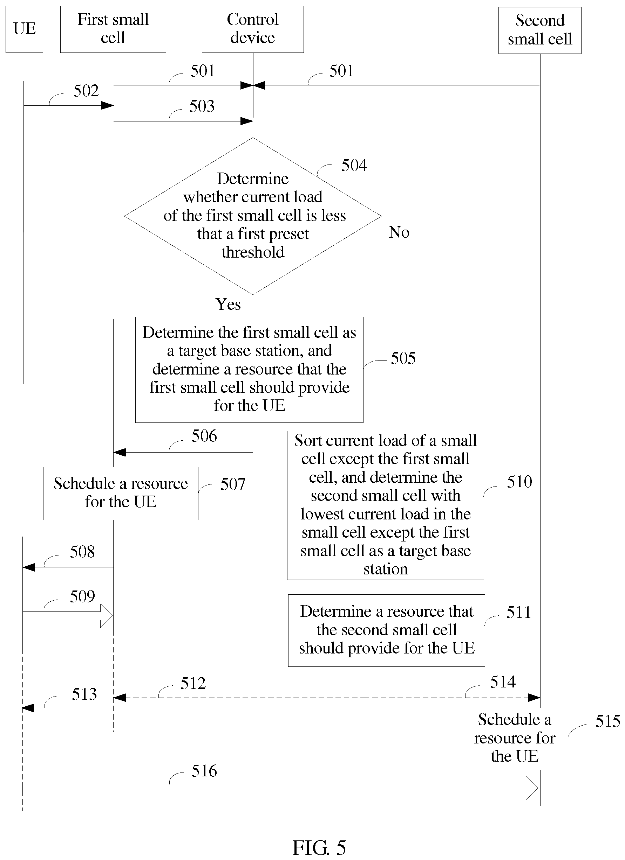

FIG. 5 is a flowchart of an access method according to an embodiment of the present invention. The control device is connected to at least one small cell, and the specified base station is a first small cell of the at least one small cell. Referring to FIG. 5, the method includes:
501. Each small cell sends resource status information of each small cell to the control device.

In this embodiment of the present invention, the control device may be a network node or a functional module. That the control device is connected to at least one small cell may be specifically that the control device is directly connected to at least one small cell, where the at least small cell may also be connected to another small cell, and therefore, the control device is indirectly connected to the another small cell.

Each small cell connected to the control device sends resource status information to the control device, where the resource status information may be used to indicate a load situation and a resource use situation of each small cell, so that the control device acquires the resource status information of each small cell, and coordinates a resource of each small cell according to the acquired resource status information.

Optionally, each small cell periodically sends the resource status information of each small cell to the control device; or the control device periodically sends a resource information request to each small cell, and when receiving the resource information request, each small cell sends the resource status information to the control device; or when receiving a resource information report instruction, any small cell sends resource status information of the small cell to the control device connected to the small cell, where the resource information report instruction may be triggered by a report confirmation operation of maintenance personnel or periodically triggered. This embodiment of the present invention imposes no limitation on a specific process in which each small cell sends the resource status information of each small cell to the control device.

The resource status information may include information such as current load, a remaining resource volume, and resource utilization of the small cell, which is not limited in this embodiment of the present invention.

502. UE sends an access request to the first small cell, where the access request carries an identifier and service information that are of the UE.

The identifier of the UE may be a device number, a telephone number, or the like of the UE. The service information may include a type of to-be-processed service, a priority, an access reason, or the like of the UE. For example, the service type may be a voice service, a video service, a Web service, or the like, and the access reason may be an emergency call, load balancing, a mobile handover, or the like. The control device may determine, according to the information such as the service type, the priority, and the access reason of the UE, a base station to be accessed by the UE and a resource that the base station to be accessed by the UE should provide for the UE. In addition, the access request may further carry location information of the UE, a measurement report of the UE, or other information, which is not limited in this embodiment of the present invention.

503. When receiving the access request, the first small cell sends the access request and an identifier of the first small cell to the control device.

The identifier of the first small cell is used to uniquely identify the first small cell, and may be an address, a base station number, or the like of the first small cell, which is not limited in this embodiment of the present invention. The first small cell adds the identifier of the first small cell when sending the access request to the control device, so that the control device may return a response to the access request to the first small cell according to the identifier of the first small cell.

504. When receiving the access request sent by the first small cell, the control device determines whether current load of the first small cell is less than a first preset threshold. If yes, perform step 505; if no, perform step 510.

The first preset threshold may be preset or be determined according to an average value of current load of each small cell, which is not limited in this embodiment of the present invention. When the current load of the first small cell is less than the first preset threshold, it may be considered that the first small cell can provide a resource for the UE, and the first small cell is determined as the target base station. When the current load of the first small cell is not less than the first preset threshold, it may be considered that the first small cell cannot provide a resource for the UE.

In another embodiment provided in the embodiments of the present invention, step 504 may be replaced by any one of the following items:
5041. When receiving the access request sent by the first small cell, the control device determines whether a remaining resource volume of the first small cell is greater than the second preset threshold. If yes, perform step 505; if no, perform step 510.

Similar to the first preset threshold, the second preset threshold may be preset or be determined according to an average value of a remaining resource volume of each small cell, which is not limited in this embodiment of the present invention. When the remaining resource volume of the first small cell is greater than the second preset threshold, it may be considered that the first small cell can provide a resource for the UE, and the first small cell is determined as the target base station.

5042. When receiving the access request sent by the first small cell, the control device determines whether current load of the first small cell is less than a first preset threshold, and determines whether a remaining resource volume of the first small cell is greater than the second preset threshold. When the current load of the first small cell is less than the first preset threshold, and the remaining resource volume of the first small cell is greater than the second preset threshold, perform step 505; otherwise, perform step 510.

In step 5042, only when the current load of the first small cell is less than the first preset threshold, and the remaining resource volume of the first small cell is greater than the second preset threshold, the control device determines that the first small cell can provide a resource for the UE. When the current load of the first small cell is not less than the first preset threshold, or the remaining resource volume of the first small cell is not greater than the second preset threshold, the control device may determine that the first small cell cannot provide a resource for the UE.

5043. When receiving the access request sent by the first small cell, the control device determines whether current load of the first small cell is less than a first preset threshold, and determines whether a remaining resource volume of the first small cell is greater than the second preset threshold. When the current load of the first small cell is less than the first preset threshold, or the remaining resource volume of the first small cell is greater than the second preset threshold, perform step 505. When the current load of the first small cell is not less than the first preset threshold, and the remaining resource volume of the first small cell is not greater than the second preset threshold, perform step 510.

In step 5043, when the current load of the first small cell is less than the first preset threshold, or the remaining resource volume of the first small cell is greater than the second preset threshold, the control device may determine that the first small cell can provide a resource for the UE; only when the current load of the first small cell is not less than the first preset threshold, and the remaining resource volume of the first small cell is not greater than the second preset threshold, the control device determines that the first small cell cannot provide a resource for the UE.

It should be noted that the control device may separately perform determining on multiple kinds of information such as the current load, the remaining resource volume, and resource utilization of the first small cell, and may determine, when any kind of information meets a preset condition, that the first small cell can provide a resource for the UE, or determine, only when each kind of information meets a preset condition, that the first small cell can provide a resource for the UE. This embodiment of the present invention imposes no limitation thereto. Further, this embodiment of the present invention gives description by using an example in which the control device first determines whether the first small cell can provide a resource for the UE, and then performs determining on a small cell except the first small cell when the first small cell cannot provide a resource for the UE. Actually, the control device may further separately perform determining on all small cells connected to the control device, so as to select a small cell that can provide a resource for the UE. This embodiment of the present invention merely gives an example of an admission control algorithm, and the control device may also perform determining based on another admission control algorithm. This embodiment of the present invention imposes no limitation on the admission control algorithm.

505. The control device determines the first small cell as the target base station, and determines, according to resource status information of the first small cell and the service information, a resource that the first small cell should provide for the UE.

In this embodiment of the present invention, the target base station is configured to provide the resource for the UE.

When determining the first small cell as the target base station, the control device may determine, according to the information such as the current load, the remaining resource volume, and the resource utilization of the first small cell and the information such as the service type, the priority, and the access reason of the UE, the resource that the first small cell should provide for the UE.

It should be noted that this embodiment of the present invention gives description by using an example in which the control device determines one target base station. Actually, the control device may determine multiple target base stations and recommend the multiple target base stations to the UE, where the UE selects one target base station from the multiple target base stations and sends an access request to the selected target base station, so as to access the selected target base station when receiving an access acknowledgement response of the selected target base station. This embodiment of the present invention imposes no limitation on a quantity of target base stations determined by the control device.

506. The control device sends a first access response to the first small cell, where the first access response carries the identifier of the UE, the identifier of the first small cell, and the resource that the first small cell should provide for the UE.

In this embodiment of the present invention, when determining the target base station, the control device sends an access response to the first small cell, where the access response carries the identifier of the UE, an identifier of the target base station, and a resource that the target base station should provide for the UE. If the target base station is the first small cell, the control device sends the first access response to the first small cell, where the identifier of the target base station carried in the first access response is the identifier of the first small cell. If the target base station is a second small cell, the control device sends a second access response to the first small cell, where the identifier of the target base station carried in the second access response is an identifier of the second small cell.

507. When receiving the first access response, the first small cell schedules a resource for the UE according to the resource that the first small cell should provide for the UE and that is determined by the control device.

In this embodiment of the present invention, the first access response is used to acknowledge the access request. When receiving the first access response, the first small cell parses the first access response, determines that a base station identifier carried in the first access response is the identifier of the first small cell, and schedules a resource of the first small cell for the UE according to the resource determined by the control device, so that the UE subsequently accesses the first small cell according to the scheduled resource. Optionally, the first small cell selects a resource from remaining resources and schedules the resource for the UE.

It should be noted that this embodiment of the present invention gives description by using an example in which the first small cell schedules a resource for the UE. Actually, the control device or another small cell may also schedule a resource for the UE. This embodiment of the present invention imposes no limitation thereto.

508. The first small cell sends the first access response to the UE according to the identifier of the UE.

This embodiment of the present invention gives description by using an example in which the first small cell forwards the received first access response to the UE. Actually, the first small cell may further determine whether the identifier of the target base station carried in the first access response is the identifier of the first small cell. If yes, the first small cell sends an access acknowledgement response to the UE; if no, the first small cell sends an access reject response to the UE, where the access reject response carries the identifier of the target base station.

509. When receiving the first access response, the UE accesses the first small cell based on the identifier of the first small cell and the resource that the first small cell provides for the UE, and the end comes.

In this embodiment of the present invention, the first small cell has scheduled the resource for the UE. When receiving the first access response, the UE parses the first access response, obtains the identifier of the first small cell and the resource that the first small cell provides for the UE, and may perform a resource configuration process based on the resource and send a connection setup complete message to the first small cell when resource configuration is completed, so that the UE accesses the first small cell.

510. The control device sorts current load of a small cell except the first small cell, and determines a second small cell with lowest current load in the small cell except the first small cell as the target base station.

In this embodiment of the present invention, when the current load of the first small cell is not less than the first preset threshold, it may be considered that the first small cell cannot provide a resource for the UE. Therefore, the control device sorts the current load of the small cell except the first small cell, selects the second small cell with the lowest current load in the small cell except the first small cell, and determines the second small cell as the target base station.

In another embodiment provided in the embodiments of the present invention, step 510 may be replaced by the following step: the control device sorts a remaining resource volume of a small cell except the first small cell, and determines a second small cell of a largest remaining resource volume in the small cell except the first small cell as the target base station.

511. The control device determines, according to resource status information of the second small cell and the service information, a resource that the second small cell should provide for the UE, and performs step 512 and step 514.

Step 511 is similar to step 505, and is not described in detail herein.

512. The control device sends a second access response to the first small cell, where the second access response carries the identifier of the UE, an identifier of the second small cell, and the resource that the second small cell should provide for the UE.

513. When receiving the second access response, the first small cell sends the second access response to the UE according to the identifier of the UE, and performs step 516.

When receiving the second access response, the first small cell parses the second access response, determines that a base station identifier carried in the second access response is the identifier of the second small cell, that is, the second small cell is the target base station, and therefore, forwards the second access response to the UE and does not need to schedule a resource for the UE.

514. The control device sends an access message to the second small cell, where the access message carries the identifier of the UE and the resource that the second small cell should provide for the UE.

515. When receiving the access message, the second small cell schedules a resource of the second small cell for the UE according to the identifier of the UE and the resource that the second small cell should provide for the UE.

516. When receiving the second access response, the UE accesses the second small cell based on the identifier of the second small cell and the resource provided by the second small cell.

In this embodiment of the present invention, after the control device is introduced, an interface between the control device and a small cell is added, signaling between the control device and the small cell is defined, an interaction process between the control device and the small cell is designed, resource coordination of each small cell is implemented by the control device, and a purpose that the UE accesses the small cell is achieved.

According to the method provided in this embodiment of the present invention, a control device is introduced, an interface between the control device and a base station is added, signaling between the control device and the base station is defined, an interaction process between the control device and the base station is designed, and the control device determines, according to resource status information of each base station and service information of UE, a target base station that the UE accesses and a resource that the target base station should provide for the UE, and can coordinate a resource of each base station, thereby increasing overall resource utilization, and improving quality of service and a system throughput. Moreover, because the control device has acquired the resource status information of each base station, interference caused by access of new UE can be avoided.

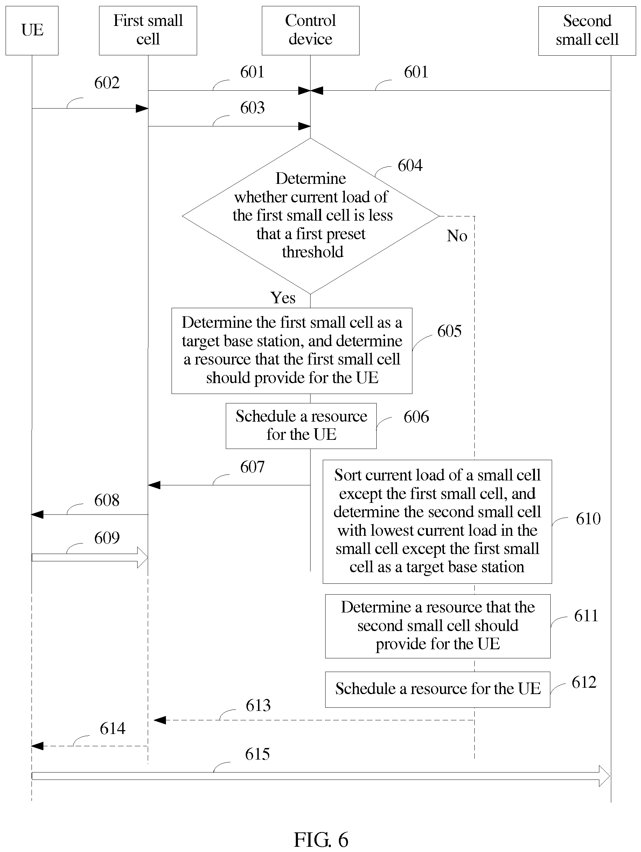

FIG. 6 is a flowchart of an access method according to an embodiment of the present invention. The control device is connected to at least one small cell, and the specified base station is a first small cell of the at least one small cell. A difference between the embodiment shown in FIG. 6 and the embodiment shown in FIG. 5 lies in that, in the embodiment shown in FIG. 6, the control device schedules a resource for the UE, and the first small cell or the second small cell does not schedule a resource for the UE. Referring to FIG. 6, the method includes:
601. Each small cell sends resource status information of each small cell to the control device.
602. UE sends an access request to the first small cell, where the access request carries an identifier and service information that are of the UE.
603. When receiving the access request, the first small cell sends the access request and an identifier of the first small cell to the control device.
604. When receiving the access request sent by the first small cell, the control device determines whether current load of the first small cell is less than a first preset threshold. If yes, perform step 605; if no, perform step 610.
605. The control device determines the first small cell as the target base station, and determines, according to resource status information of the first small cell and the service information, a resource that the first small cell should provide for the UE.
606. The control device schedules a resource of the first small cell for the UE according to the determined resource that the first small cell should provide for the UE.
607. The control device sends a first access response to the first small cell, where the first access response carries the identifier of the UE, the identifier of the first small cell, and the resource that the control device schedules for the UE.
608. When receiving the first access response, the first small cell sends the first access response to the UE.
609. When receiving the first access response, the UE accesses the first small cell based on the identifier of the first small cell and the resource that the control device schedules for the UE, and the end comes.
610. The control device sorts current load of a small cell except the first small cell, and determines a second small cell with lowest current load in the small cell except the first small cell as the target base station.
611. The control device determines, according to resource status information of the second small cell and the service information, a resource that the second small cell should provide for the UE.
612. The control device schedules a resource of the second small cell for the UE according to the determined resource that the second small cell should provide for the UE.
613. The control device sends a second access response to the first small cell, where the second access response carries the identifier of the UE, an identifier of the second small cell, and the resource that the control device schedules for the UE.
614. When receiving the second access response, the first small cell sends the second access response to the UE.
615. When receiving the second access response, the UE accesses the second small cell based on the identifier of the second small cell and the resource that the control device schedules for the UE, and the end comes.

According to the method provided in this embodiment of the present invention, a control device is introduced, an interface between the control device and a base station is added, signaling between the control device and the base station is defined, an interaction process between the control device and the base station is designed, and the control device determines, according to resource status information of each base station and service information of UE, a target base station that the UE accesses and a resource that the target base station should provide for the UE, and can coordinate a resource of each base station, thereby increasing overall resource utilization, and improving quality of service and a system throughput. Moreover, because the control device has acquired the resource status information of each base station, interference caused by access of new UE can be avoided.

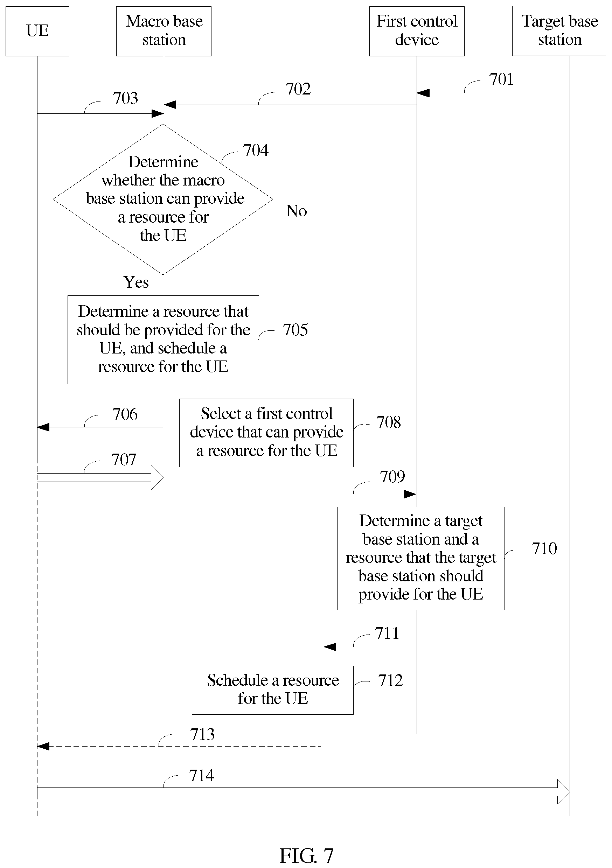

FIG. 7 is a flowchart of an access method according to an embodiment of the present invention. A control device is connected to at least one macro base station and at least one small cell. Correspondingly, one macro base station is connected to at least one control device. A difference between the embodiment shown in FIG. 7 and the embodiment shown in FIG. 5 lies in that a specified base station in the embodiment shown in FIG. 7 is a macro base station, instead of a small cell. A difference between the embodiment shown in FIG. 7 and the embodiment shown in FIG. 6 lies in that, in the embodiment shown in FIG. 7, the macro base station schedules a resource for the UE, and the small cell does not schedule a resource for the UE. Referring to FIG. 7, the method includes:
701. Each small cell sends resource status information of each small cell to a control device connected to each small cell.

In this embodiment of the present invention, each control device is configured to coordinate a resource of each small cell connected to each control device, and each macro base station is configured to select a control device according to resource status information corresponding to the control device connected to each macro base station.

702. Each control device sends the resource status information of each small cell to a macro base station connected to each control device.

Each small cell includes a small cell that is located in a macro cell corresponding to the macro base station, and may further include a small cell that is located outside the macro cell and on an edge of an adjacent macro cell of the macro cell. Therefore, what the control device sends to the macro base station is resource status information of all small cells within the macro cell and of the small cell on the edge of the adjacent macro cell.

Optionally, each control device periodically sends the acquired resource status information of each small cell to the macro base station connected to each control device; or each macro base station periodically sends a resource information request to the control device connected to each macro base station, and when receiving the resource information request of the macro base station, each control device sends the resource status information of each small cell acquired by each control device to the macro base station; or when receiving a resource information report instruction, any control device sends the resource status information of each small cell acquired by the control device to a macro base station connected to the control device. This embodiment of the present invention imposes no limitation on a manner of sending the resource status information.

Further, this embodiment of the present invention gives description by using an example in which the control device sends the resource status information of each small cell to the macro base station. Actually, when acquiring the resource status information of each small cell, the control device may collect statistics on the resource status information of each small cell to acquire overall resource status information corresponding to the control device, such as total load, a total remaining resource volume, average resource utilization, and send the overall resource status information to the macro base station, so that the macro base station can subsequently determine, according to the overall resource status information, whether the control device can provide a resource for the UE.

703. The UE sends an access request to the macro base station, where the access request carries an identifier and service information that are of the UE.

704. When receiving the access request, the macro base station determines, according to resource status information of the macro base station and the service information, whether the macro base station can provide a resource for the UE. If yes, perform step 705; if no, perform step 708.

A manner in which the macro base station determines whether the macro base station can provide a resource for the UE is similar to a manner in which the control device determines whether the first small cell can provide a resource for the UE, and details are not described herein.

705. The macro base station determines a resource that should be provided for the UE, and schedules a resource for the UE according to the resource that the macro base station should provide for the UE.

706. The macro base station sends a first access response to the UE, where the first access response carries the identifier of the UE, an identifier of the macro base station, and the resource that the macro base station schedules for the UE.

707. When receiving the first access response, the UE accesses the macro base station based on the identifier of the macro base station and the resource that the macro base station schedules for the UE, and the end comes.

708. The macro base station selects, according to the resource status information sent by each control device, a first control device that can provide a resource for the UE.

Optionally, according to overall resource status information sent by each control device, the macro base station selects a control device of lowest total load, or selects a control device of a largest total remaining resource volume.

Step 708 may be replaced by the following step: the macro base station sends an access reject response to the UE when determining that neither the macro base station nor each small cell connected to each control device can provide a resource for the UE. The macro base station may further calculate, according to the resource status information of the macro base station and the resource status information of each small cell, a time length that the UE needs to wait, and send the time length to the UE, so that the UE sends the access request to the macro base station again after the corresponding time length.

709. The macro base station sends the access request to the first control device, where the access request carries the identifier of the UE, the service information, and an identifier of the macro base station.

710. When receiving the access request, the first control device determines a target base station and a resource that the target base station should provide for the UE.

A manner in which the first control device determines the target base station and the resource that the target base station should provide for the UE is similar to the foregoing steps 304-305 and 310-311, and details are not described herein.

711. The first control device sends a second access response to the macro base station, where the second access response carries the identifier of the UE, an identifier of the target base station, and the resource that the target base station should provide for the UE.

712. When receiving the second access response, the macro base station schedules a resource for the UE according to the resource that the target base station should provide for the UE and that is determined by the first control device.

713. The macro base station sends the second access response to the UE according to the identifier of the UE.

714. When receiving the second access response, the UE accesses the target base station based on the identifier of the target base station and the resource that the macro base station schedules for the UE, and the end comes.

According to the method provided in this embodiment of the present invention, a control device is introduced, an interface between the control device and a base station is added, signaling between the control device and the base station is defined, an interaction process between the control device and the base station is designed, and the control device determines, according to resource status information of each base station and service information of UE, a target base station that the UE accesses and a resource that the target base station should provide for the UE, and can coordinate a resource of each base station, thereby increasing overall resource utilization, and improving quality of service and a system throughput. Moreover, because the control device has acquired the resource status information of each base station, interference caused by access of new UE can be avoided.

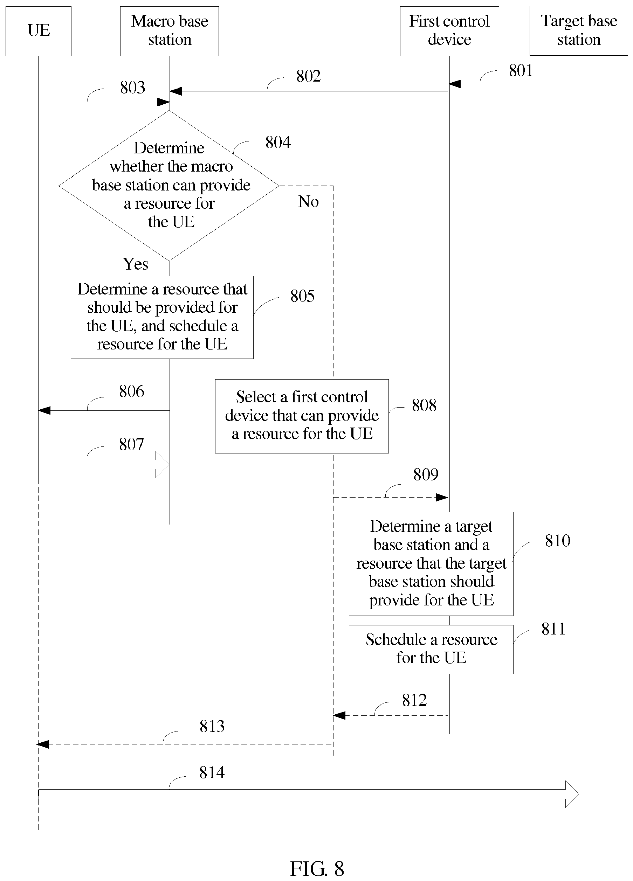

FIG. 8 is a flowchart of an access method according to an embodiment of the present invention. A control device is connected to at least one macro base station and at least one small cell. Correspondingly, one macro base station is connected to at least one control device. A difference between the embodiment shown in FIG. 8 and the embodiment shown in FIG. 7 lies in that, in the embodiment shown in FIG. 8, when the first control device determines the target base station, the first control device schedules a resource for the UE, and the macro base station does not schedule a resource for the UE. Referring to FIG. 8, the method includes:
801. Each small cell sends resource status information of each small cell to a control device connected to each small cell.
802. Each control device sends the resource status information of each small cell to a macro base station connected to each control device.
803. The UE sends an access request to the macro base station, where the access request carries an identifier and service information that are of the UE.
804. When receiving the access request, the macro base station determines, according to resource status information of the macro base station and the service information, whether the macro base station can provide a resource for the UE. If yes, perform step 805; if no, perform step 808.
805. The macro base station determines a resource that should be provided for the UE, and schedules a resource for the UE according to the resource that the macro base station should provide for the UE.
806. The macro base station sends a first access response to the UE, where the first access response carries the identifier of the UE, an identifier of the macro base station, and the resource that the macro base station schedules for the UE.
807. When receiving the first access response, the UE accesses the macro base station based on the identifier of the macro base station and the resource that the macro base station schedules for the UE, and the end comes.
808. The macro base station selects, according to the resource status information sent by each control device, a first control device that can provide a resource for the UE.
809. The macro base station sends the access request to the first control device, where the access request carries the identifier of the UE, the service information, and an identifier of the macro base station.
810. When receiving the access request, the first control device determines a target base station and a resource that the target base station should provide for the UE.
811. The first control device schedules a resource of the target base station for the UE according to the determined resource that the target base station should provide for the UE.
812. The first control device sends a second access response to the macro base station, where the second access response carries the identifier of the UE, an identifier of the target base station, and the resource that the target base station should provide for the UE.
813. When receiving the second access response, the macro base station sends the second access response to the UE according to the identifier of the UE.
814. When receiving the second access response, the UE accesses the target base station based on the identifier of the target base station and the resource that the macro base station schedules for the UE, and the end comes.

According to the method provided in this embodiment of the present invention, a control device is introduced, an interface between the control device and a base station is added, signaling between the control device and the base station is defined, an interaction process between the control device and the base station is designed, and the control device determines, according to resource status information of each base station and service information of UE, a target base station that the UE accesses and a resource that the target base station should provide for the UE, and can coordinate a resource of each base station, thereby increasing overall resource utilization, and improving quality of service and a system throughput. Moreover, because the control device has acquired the resource status information of each base station, interference caused by access of new UE can be avoided.

The following describes a process of introducing the control device.

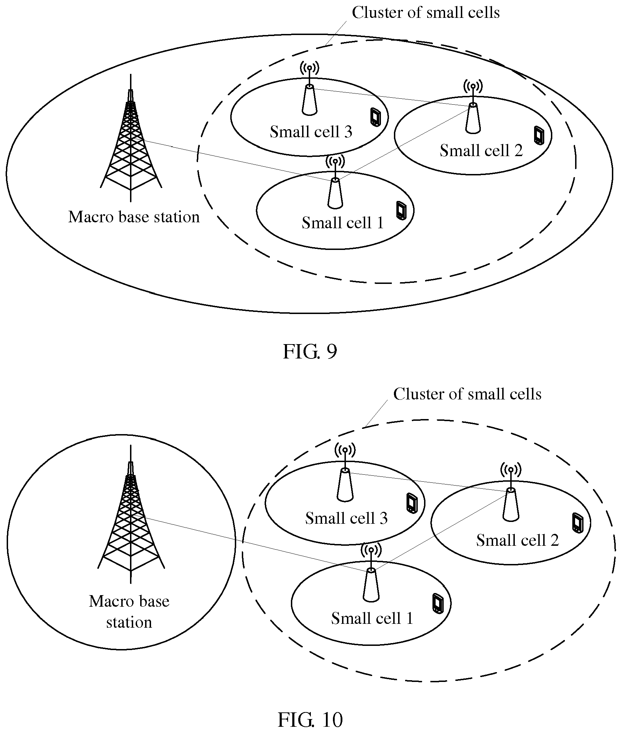

FIG. 9 is a schematic diagram of coverage ranges of a macro base station and a small cell. Referring to FIG. 9, coverage of the macro base station and that of the small cell are in a same carrier, and small cells within a same cluster are connected to each other. In this case, a small cell 1 directly connected to the macro base station may be selected as the control device, or another network node is introduced to be used as the control device, where the network node is connected to the macro base station and is connected to any small cell within the cluster.

FIG. 10 is a schematic diagram of coverage ranges of a macro base station and a small cell. Referring to FIG. 10, coverage of the macro base station and that of the small cell are not in a same carrier, and small cells within a same cluster are connected to each other. In this case, a small cell 1 directly connected to the macro base station may be selected as the control device, or another network node is introduced to be used as the control device, where the network node is connected to the macro base station and is connected to any small cell within the cluster.

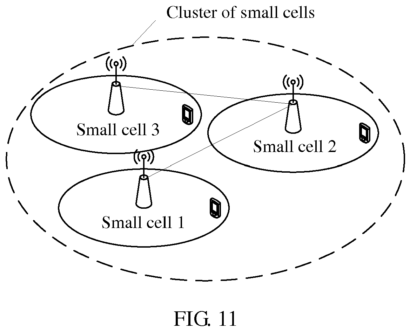

FIG. 11 is a schematic diagram of coverage ranges of a macro base station and a small cell. Referring to FIG. 11, only a small cell is deployed, no macro base station is deployed, and small cells within a same cluster are connected to each other. In this case, any small cell may be selected as the control device, or another network node is introduced to be used as the control device, where the network node is connected to any small cell within the cluster.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, an optical disc, or the like.

The foregoing descriptions are merely exemplary embodiments of the present invention, but are not intended to limit the present invention. Any modification, equivalent replacement, and improvement made without departing from the principle of the present invention shall fall within the protection scope of the present invention.

## Claims

1. An access system, wherein the system comprises: at least one control device (201), at least one user equipment (202), UE, and at least one base station, wherein the at least one base station comprises a specified base station (203);
the control device (201) is configured to receive an access request sent by the specified base station (203), wherein the access request carries an identifier and service information that are of the at least one UE (202) that requested to access the specified base station (203);
the control device (201) is further configured to determine, according to pre-acquired resource status information of each base station and the service information, a target base station and a resource that the target base station should provide for the UE (202);
the control device (201) is configured to send an access response to the specified base station (203), wherein the access response carries the identifier of the UE (202), an identifier of the target base station, and the resource;
the specified base station is configured to forward the access response to the UE according to the identifier of the UE (202); and
the UE (202) is configured to: when receiving the access response, access the target base station based on the identifier of the target base station and the resource that the target base station provides for the UE (202);
wherein the control device (201) is further configured to determine, according to resource status information of the specified base station, whether the specified base station can provide a resource for the UE;
when the control device determines that the specified base station can provide a resource for the UE, the control device is further configured to determine the specified base station as the target base station, and and further determine the resource according to the resource status information of the specified base station and the service information;
when the control device determines that the specified base station cannot provide a resource for the UE, the control device is further configured to determine, according to resource status information of a base station except the specified base station, a base station that can provide a resource for the UE as the target base station, and and further determine the resource according to the resource status information of the target base station and the service information.

2. A control device, wherein the control device comprises: a receiver (301), a transmitter (302), a memory (303), and a processor (304), wherein the receiver (301), the transmitter (302), and the memory (303) are separately connected to the processor (304), the memory (303) stores program code, and the processor (304) is configured to invoke the program code to execute the following operations:
receiving an access request sent by a specified base station (203), wherein the access request carries an identifier and service information that are of a user equipment (202), UE, that requested to access the specified base station (203);
determining, according to pre-acquired resource status information of each base station and the service information, a target base station and a resource that the target base station should provide for the UE (202); and
sending an access response to the specified base station (203), wherein the access response carries the identifier of the UE (202), an identifier of the target base station, and the resource, so that the specified base station (203) forwards the access response to the UE (202) according to the identifier of the UE (202), and when receiving the access response, the UE (202) accesses the target base station based on the identifier of the target base station and the resource that the target base station provides for the UE (202),
wherein the determining, according to pre-acquired resource status information of each base station and the service information, a target base station and a resource that the target base station should provide for the UE (202) comprises:
determining, by the control device according to resource status information of the specified base station, whether the specified base station can provide a resource for the UE;
when determining that the specified base station can provide a resource for the UE, determining the specified base station as the target base station, and determining the resource according to the resource status information of the specified base station and the service information;
when determining that the specified base station cannot provide a resource for the UE, determining, according to resource status information of a base station except the specified base station, a base station that can provide a resource for the UE as the target base station, and determining the resource according to the resource status information of the target base station and the service information.

3. An access method, wherein the method comprises:
receiving (401), by a control device, an access request sent by a specified base station, wherein the access request carries an identifier and service information that are of a user equipment, UE, that requested to access the specified base station;
determining (402), by the control device according to pre-acquired resource status information of each base station and the service information, a target base station and a resource that the target base station should provide for the UE; and
sending (403), by the control device, an access response to the specified base station, wherein the access response carries the identifier of the UE, an identifier of the target base station, and the resource, so that the specified base station forwards the access response to the UE according to the identifier of the UE, and when receiving the access response, the UE accesses the target base station based on the identifier of the target base station and the resource that the target base station provides for the UE,
wherein the determining (402), by the control device according to pre-acquired resource status information of each base station and the service information, a target base station and a resource that the target base station should provide for the UE comprises:
determining, by the control device according to resource status information of the specified base station, whether the specified base station can provide a resource for the UE;
when the control device determines that the specified base station can provide a resource for the UE, determining the specified base station as the target base station, and determining the resource according to the resource status information of the specified base station and the service information;
when the control device determines that the specified base station cannot provide a resource for the UE, determining, according to resource status information of a base station except the specified base station, a base station that can provide a resource for the UE as the target base station, and determining the resource according to the resource status information of the target base station and the service information.

4. The method according to claim 3, wherein resource status information of a base station comprises current load and a remaining resource volume, and the determining, by the control device according to resource status information of the specified base station, whether the specified base station can provide a resource for the UE comprises:
determining, by the control device, whether current load of the specified base station is less than a first preset threshold, and when the current load of the specified base station is less than the first preset threshold, determining that the specified base station can provide a resource for the UE; or
determining, by the control device, whether a remaining resource volume of the specified base station is greater than a second preset threshold, and when the remaining resource volume of the specified base station is greater than the second preset threshold, determining that the specified base station can provide a resource for the UE.

5. The method according to claim 3, wherein when the control device determines that the specified base station cannot provide a resource for the UE, the determining, according to resource status information of a base station except the specified base station, a base station that can provide a resource for the UE as the target base station comprises:
when the control device determines that the specified base station cannot provide a resource for the UE, determining a base station with lowest current load in the base station except the specified base station as the target base station; or
when the control device determines that the specified base station cannot provide a resource for the UE, determining a base station with a highest remaining resource volume in the base station except the specified base station as the target base station.

6. The method according to claim 3, wherein the sending, by the control device, an access response to the specified base station comprises:
when the target base station is the specified base station, sending, by the control device, a first access response to the specified base station, wherein the first access response carries the identifier of the UE, an identifier of the specified base station, and a resource that the specified base station should provide for the UE, and the first access response is used to acknowledge the access request, so that the specified base station forwards the first access response to the UE according to the identifier of the UE, and when receiving the first access response, the UE accesses the specified base station based on the identifier of the specified base station and the resource that the specified base station provides for the UE; or
when the target base station is a first base station except the specified base station, sending, by the control device, a second access response to the specified base station, wherein the second access response carries the identifier of the UE, an identifier of the first base station, and a resource that the first base station should provide for the UE, so that the specified base station forwards the second access response to the UE according to the identifier of the UE, and when receiving the second access response, the UE accesses the first base station based on the identifier of the first base station and the resource that the first base station provides for the UE.

7. The method according to claim 3, wherein after the determining, by the control device according to pre-acquired resource status information of each base station and the service information, a target base station and a resource that the target base station should provide for the UE, the method further comprises:
scheduling, by the control device, a resource for the UE according to the resource that the target base station should provide for the UE.

8. The method according to claim 3, wherein after the determining, by the control device according to pre-acquired resource status information of each base station and the service information, a target base station and a resource that the target base station should provide for the UE, the method further comprises:
when the target base station is the specified base station, carrying a scheduling identifier in the first access response, so that when receiving the first access response, the specified base station schedules a resource for the UE according to the identifier of the UE and the resource that the specified base station should provide for the UE; or
when the target base station is a first base station, sending, by the control device, an access message to the first base station, wherein the access message carries the identifier of the UE and the resource, so that when receiving the access message, the first base station schedules a resource for the UE according to the identifier of the UE and the resource that the first base station should provide for the UE.

9. The method according to any one of claims 3 to 8, wherein the specified base station is a macro base station or a small cell.

10. The method according to claim 9, wherein when the specified base station is the macro base station, before the receiving an access request sent by a specified base station, the method further comprises:
when the macro base station receives an access request sent by the UE and determines, according to resource status information of the macro base station, that the macro base station cannot provide a resource for the UE, selecting a control device according to acquired resource status information of each base station pre-acquired by each control device, and sending the access request to the selected control device, wherein the selected control device executes a step of receiving the access request.

11. The method according to claim 9, wherein the control device is located in a base station connected to the macro base station.

## Patentansprüche

1. Zugriffs system, wobei das System Folgendes umfasst: mindestens eine Steuervorrichtung (201), mindestens ein Benutzergerät (202) bzw. UE und mindestens eine Basisstation, wobei die mindestens eine Basisstation eine spezifizierte Basisstation (203) umfasst;
wobei die Steuervorrichtung (201) konfiguriert ist zum Empfangen einer Zugriffsanforderung, die durch die spezifizierte Basisstation (203) gesendet wird, wobei die Zugriffsanforderung eine Kennung und Dienstinformationen des mindestens einen UE (202), das anforderte, auf die spezifizierte Basisstation (203) zuzugreifen, führt;
die Steuervorrichtung (201) ferner konfiguriert ist zum Bestimmen, gemäß zuvor erfassten Ressourcenstatusinformationen jeder Basisstation und den Dienstinformationen, einer Zielbasisstation und einer Ressource, die die Zielbasisstation für das UE (202) bereitstellen sollte;
die Steuervorrichtung (201) konfiguriert ist zum Senden einer Zugriffsantwort zur spezifizierten Basisstation (203), wobei die Zugriffsantwort die Kennung des UE (202), eine Kennung der Zielbasisstation und die Ressource führt;
die spezifizierte Basisstation konfiguriert ist zum Weiterleiten der Zugriffsantwort zum UE gemäß der Kennung des UE (202) und
das UE (202), wenn die Zugriffsantwort empfangen wird, konfiguriert ist zum Zugreifen auf die Zielbasisstation basierend auf der Kennung der Zielbasisstation und der Ressource, die die Zielbasisstation für das UE (202) bereitstellt;
wobei die Steuervorrichtung (201) ferner konfiguriert ist zum Bestimmen, gemäß den Ressourcenstatusinfonnationen der spezifizierten Basisstation, ob die spezifizierte Basisstation eine Ressource für das UE bereitstellen kann;
wenn die Steuervorrichtung bestimmt, dass die spezifizierte Basisstation eine Ressource für das UE bereitstellen kann, die Steuervorrichtung ferner konfiguriert ist zum Bestimmen der spezifizierten Basisstation als die Zielbasisstation und ferner zum Bestimmen der Ressource gemäß den Ressourcenstatusinformationen der spezifizierten Basisstation und den Dienstinformationen;
wenn die Steuervorrichtung bestimmt, dass die spezifizierte Basisstation keine Ressource für das UE bereitstellen kann, die Steuervorrichtung ferner konfiguriert ist zum Bestimmen, gemäß Ressourcenstatusinformationen einer Basisstation außer der spezifizierten Basisstation, einer Basisstation, die eine Ressource für das UE bereitstellen kann, als die Zielbasisstation und ferner zum Bestimmen der Ressource gemäß den Ressourcenstatusinformationen der Zielbasisstation und den Dienstinformationen.

2. Steuervorrichtung, wobei die Steuervorrichtung einen Empfänger (301), einen Sender (302), einen Speicher (303) und einen Prozessor (304) umfasst, wobei der Empfänger (301), der Sender (302) und der Speicher (303) separat mit dem Prozessor (304) verbunden sind, der Speicher (303) Programmcode speichert und der Prozessor (304) konfiguriert ist zum Aufrufen des Programmcodes, um die folgenden Operationen auszuführen:
Empfangen einer Zugriffs anforderung, die durch eine spezifizierte Basisstation (203) gesendet wird, wobei die Zugriffsanforderung eine Kennung und Dienstinformationen eines Benutzergeräts (202) bzw. UE, das anforderte, auf die spezifizierte Basisstation (203) zuzugreifen, fuhrt;
Bestimmen, gemäß zuvor erfassten Ressourcenstatusinformationen jeder Basisstation und den Dienstinformationen, einer Zielbasisstation und einer Ressource, die die Zielbasisstation für das UE (202) bereitstellen sollte; und
Senden einer Zugriffsantwort zur spezifizierten Basisstation (203), wobei die Zugriffsantwort die Kennung des UE (202), eine Kennung der Zielbasisstation und die Ressource führt, so dass die spezifizierte Basisstation (203) die Zugriffsantwort zum UE (202) gemäß der Kennung des UE (202) weiterleitet, und wenn die Zugriffsantwort empfangen wird, das UE (202) auf die Zielbasisstation basierend auf der Kennung der Zielbasisstation und der Ressource, die die Zielbasisstation für das UE (202) bereitstellt, zugreift,
wobei das Bestimmen, gemäß den zuvor erfassten Ressourcenstatusinformationen jeder Basisstation und den Dienstinformationen, einer Zielbasisstation und einer Ressource, die die Zielbasisstation für das UE (202) bereitstellen sollte, Folgendes umfasst:
Bestimmen, durch die Steuervorrichtung gemäß den Ressourcenstatusinformationen der spezifizierten Basisstation, ob die spezifizierte Basisstation eine Ressource für das UE bereitstellen kann;
wenn bestimmt wird, dass die spezifizierte Basisstation eine Ressource für das UE bereitstellen kann, Bestimmen der spezifizierten Basisstation als die Zielbasisstation und Bestimmen der Ressource gemäß den Ressourcenstatusinformationen der spezifizierten Basisstation und den Dienstinformationen;
wenn bestimmt wird, dass die spezifizierte Basisstation keine Ressource für das UE bereitstellen kann, Bestimmen, gemäß Ressourcenstatusinformationen einer Basisstation außer der spezifizierten Basisstation, einer Basisstation, die eine Ressource für das UE bereitstellen kann, als die Zielbasisstation und Bestimmen der Ressource gemäß den Ressourcenstatusinformationen der Zielbasisstation und den Dienstinformationen.

3. Zugriffsverfahren, wobei das Verfahren Folgendes umfasst:
Empfangen (401), durch eine Steuervorrichtung, einer Zugriffsanforderung, die durch die spezifizierte Basisstation gesendet wird, wobei die Zugriffsanforderung eine Kennung und Dienstinformationen eines Benutzergeräts bzw. UE, das anforderte, auf die spezifizierte Basisstation zuzugreifen, führt;
Bestimmen (402), durch die Steuervorrichtung gemäß zuvor erfassten Ressourcenstatusinformationen jeder Basisstation und den Dienstinformationen, einer Zielbasisstation und einer Ressource, die die Zielbasisstation für das UE bereitstellen sollte; und
Senden (403), durch die Steuervorrichtung, einer Zugriffsantwort zur spezifizierten Basisstation, wobei die Zugriffsantwort die Kennung des UE, eine Kennung der Zielbasisstation und die Ressource führt, so dass die spezifizierte Basisstation die Zugriffsantwort zum UE gemäß der Kennung des UE weiterleitet, und wenn die Zugriffsantwort empfangen wird, das UE auf die Zielbasisstation basierend auf der Kennung der Zielbasisstation und der Ressource, die die Zielbasisstation für das UE bereitstellt, zugreift,
wobei das Bestimmen (402), durch die Steuervorrichtung gemäß zuvor erfassten Ressourcenstatusinformationen jeder Basisstation und den Dienstinformationen, einer Zielbasisstation und einer Ressource, die die Zielbasisstation für das UE bereitstellen sollte, Folgendes umfasst:
Bestimmen, durch die Steuervorrichtung gemäß den Ressourcenstatusinformationen der spezifizierten Basisstation, ob die spezifizierte Basisstation eine Ressource für das UE bereitstellen kann;
wenn die Steuervorrichtung bestimmt, dass die spezifizierte Basisstation eine Ressource für das UE bereitstellen kann, Bestimmen der spezifizierten Basisstation als die Zielbasisstation und Bestimmen der Ressource gemäß den Ressourcenstatusinformationen der spezifizierten Basisstation und den Dienstinformationen;
wenn die Steuervorrichtung bestimmt, dass die spezifizierte Basisstation keine Ressource für das UE bereitstellen kann, Bestimmen, gemäß Ressourcenstatusinformationen einer Basisstation außer der spezifizierten Basisstation, einer Basisstation, die eine Ressource für das UE bereitstellen kann, als die Zielbasisstation und Bestimmen der Ressource gemäß den Ressourcenstatusinformationen der Zielbasisstation und den Dienstinformationen.

4. Verfahren nach Anspruch 3, wobei Ressourcenstatusinformatfonen einer Basisstation eine gegenwärtige Belastung und ein verbleibendes Ressourcenvolumen umfassen und das Bestimmen, durch die Steuervorrichtung gemäß Ressourcenstatusinformationen der spezifizierten Basisstation, ob die spezifizierte Basisstation eine Ressource für das UE bereitstellen kann, Folgendes umfasst:
Bestimmen, durch die Steuervorrichtung, ob eine gegenwärtige Belastung der spezifizierten Basisstation geringer als eine erste voreingestellte Schwelle ist, und, wenn die gegenwärtige Belastung der spezifizierten Basisstation geringer als die erste voreingestellte Schwelle ist, Bestimmen, dass die spezifizierte Basisstation eine Ressource für das UE bereitstellen kann; oder
Bestimmen, durch die Steuervorrichtung, ob ein verbleibendes Ressourcenvolumen der spezifizierten Basisstation größer als eine zweite voreingestellte Schwelle ist, und, wenn das verbleibende Ressourcenvolumen der spezifizierten Basisstation größer als die zweite voreingestellte Schwelle ist, Bestimmen, dass die spezifizierte Basisstation eine Ressource für das UE bereitstellen kann.

5. Verfahren nach Anspruch 3, wobei, wenn die Steuervorrichtung bestimmt, dass die spezifizierte Basisstation keine Ressource für das UE bereitstellen kann, das Bestimmen, gemäß Ressourcenstatusinformationen einer Basisstation außer der spezifizierten Basisstation, einer Basisstation, die eine Ressource für das UE bereitstellen kann, als die Zielbasisstation Folgendes umfasst:
wenn die Steuervorrichtung bestimmt, dass die spezifizierte Basisstation keine Ressource für das UE bereitstellen kann, Bestimmen einer Basisstation mit der geringsten gegenwärtigen Belastung in der Basisstation außer der spezifizierten Basisstation als die Zielbasisstation oder,
wenn die Steuervorrichtung bestimmt, dass die spezifizierte Basisstation keine Ressource für das UE bereitstellen kann, Bestimmen einer Basisstation, mit einem höchsten verbleibenden Ressourcenvolumen in der Basisstation außer der spezifizierten Basisstation als die Zielbasisstation.

6. Verfahren nach Anspruch 3, wobei das Senden, durch die Steuervorrichtung, einer Zugriffsantwort zur spezifizierten Basisstation Folgendes umfasst:
wenn die Zielbasisstation die spezifizierte Basisstation ist, Senden, durch die Steuervorrichtung, einer ersten Zugriffsantwort zur spezifizierten Basisstation, wobei die erste Zugriffsantwort die Kennung des UE, eine Kennung der spezifizierten Basisstation und eine Ressource, die die spezifizierte Basisstation für das UE bereitstellen sollte, führt und die erste Zugriffsantwort zum Bestätigen der Zugangsanforderung verwendet wird, so dass die spezifizierte Basisstation die erste Zugriffsantwort zum UE gemäß der Kennung des UE weiterleitet, und wenn die erste Zugriffsantwort empfangen wird, das UE auf die spezifizierte Basisstation basierend auf der Kennung der spezifizierten Basisstation und der Ressource, die die spezifizierte Basisstation für das UE bereitstellt, zugreift oder,
wenn die Zielbasisstation eine erste Basisstation außer der spezifizierten Basisstation ist, Senden, durch die Steuervorrichtung, einer zweiten Zugriffsantwort zur spezifizierten Basisstation, wobei die zweite Zugriffsantwort die Kennung des UE, eine Kennung der ersten Basisstation und eine Ressource, die die erste Basisstation für das UE bereitstellen sollte, führt, so dass die spezifizierte Basisstation die zweite Zugriffsantwort zum UE gemäß der Kennung des UE weiterleitet, und wenn die zweite Zugriffsantwort empfangen wird, das UE auf die erste Basisstation basierend auf der Kennung der ersten Basisstation und der Ressource, die die erste Basisstation für das UE bereitstellt, zugreift.

7. Verfahren nach Anspruch 3, wobei das Verfahren nach dem Bestimmen, durch die Steuervorrichtung gemäß zuvor erfassten Ressourcenstatusinformationen jeder Basisstation und den Dienstinformationen, einer Zielbasisstation und einer Ressource, die die Zielbasisstation für das UE bereitstellen sollte, ferner Folgendes umfasst:
Einplanen, durch die Steuervorrichtung, einer Ressource für das UE gemäß der Ressource, die die Zielbasisstation für das UE bereitstellen sollte.

8. Verfahren nach Anspruch 3, wobei das Verfahren nach dem Bestimmen, durch die Steuervorrichtung gemäß zuvor erfassten Ressourcenstatusinformationen jeder Basisstation und den Dienstinformationen, einer Zielbasisstation und einer Ressource, die die Zielbasisstation für das UE bereitstellen sollte, ferner Folgendes umfasst:
wenn die Zielbasisstation die spezifizierte Basisstation ist, Führen einer Planungs-Kennung in der ersten Zugriffsantwort, so dass, wenn die erste Zugriffsantwort empfangen wird, die spezifizierte Basisstation eine Ressource für das UE gemäß der Kennung des UE und der Ressource, die die spezifizierte Basisstation für das UE bereitstellen sollte, einplant; oder,
wenn die Zielbasisstation eine erste Basisstation ist, Senden, durch die Steuervorrichtung, einer Zugriffsnachricht zur ersten Basisstation, wobei die Zugriffsnachricht die Kennung des UE und die Ressource führt so dass, wenn die Zugriffsnachricht empfangen wird, die erste Basisstation eine Ressource für das UE gemäß der Kennung des UE und der Ressource, die die erste Basisstation für das UE bereitstellen sollte, einplant.

9. Verfahren nach einem der Ansprüche 3 bis 8, wobei die spezifizierte Basisstation eine Makrobasisstation oder eine kleine Zelle ist.

10. Verfahren nach Anspruch 9, wobei, wenn die spezifizierte Basisstation die Makrobasisstation ist, das Verfahren vor dem Empfangen einer Zugriffsanforderung, die durch eine spezifizierte Basisstation gesendet wird, ferner Folgendes umfasst:
wenn die Makrobasisstation eine Zugangsanforderung empfängt, die durch das UE gesendet wird, und bestimmt, gemäß Ressourcenstatusinformationen der Makrobasisstation, dass die Makrobasisstation keine Ressource für das UE bereitstellen kann, Auswählen einer Steuervorrichtung gemäß erfassten Ressourcenstatusinformationen jeder Basisstation, die zuvor durch jede Steuervorrichtung erfasst werden, und Senden der Zugangsanforderung zur ausgewählten Steuervorrichtung, wobei die ausgewählte Steuervorrichtung einen Schritt des Empfangens der Zugriffsanforderung ausführt.

11. Verfahren nach Anspruch 9, wobei sich die Steuervorrichtung in einer Basisstation befindet, die mit der Makrobasisstation verbunden ist.

## Revendications

1. Système d'accès, dans lequel le système comprend: au moins un dispositif de commande (201), au moins un équipement utilisateur (202), UE, et au moins une station de base, l'au moins une station de base comportant une station de base spécifiée (203) ; le dispositif de commande (201) est configuré pour recevoir une requête d'accès envoyée par la station de base spécifiée (203), la requête d'accès contenant un identifiant et des informations de service qui appartiennent à l'au moins un UE (202) qui a demandé d'accéder à la station de base spécifiée (203) ;
le dispositif de commande (201) est en outre configuré pour déterminer, selon des informations d'état de ressources pré-acquises de chaque station de base et les informations de service, une station de base cible et une ressource que la station de base cible devrait fournir à l'UE (202) ;
le dispositif de commande (201) est configuré pour envoyer une réponse d'accès à la station de base spécifiée (203), la réponse d'accès contenant l'identifiant de l'UE (202), un identifiant de la station de base cible, et la ressource ;
la station de base spécifiée est configurée pour transmettre la réponse d'accès à l'UE selon l'identifiant de l'UE (202) ; et
l'UE (202) est configuré pour : lors de la réception de la réponse d'accès, accéder à la station de base cible sur la base de l'identifiant de la station de base cible et à la ressource que la station de base cible fournit à l'UE (202) ;
le dispositif de commande (201) étant en outre configuré pour déterminer, selon des informations d'état de ressources de la station de base spécifiée, si la station de base spécifiée peut fournir une ressource à l'UE ;
lorsque le dispositif de commande détermine que la station de base spécifiée peut fournir une ressource à l'UE, le dispositif de commande est en outre configuré pour déterminer la station de base spécifiée comme la station de base cible, et en outre pour déterminer la ressource selon les informations d'état de ressources de la station de base spécifiée et les informations de service ;
lorsque le dispositif de commande détermine que la station de base spécifiée ne peut pas fournir une ressource à l'UE, le dispositif de commande est en outre configuré pour déterminer, selon des informations d'état de ressources d'une station de base à l'exception de la station de base spécifiée, une station de base qui peut fournir une ressource à l'UE comme la station de base cible, et en outre pour déterminer la ressource selon les informations d'état de ressources de la station de base cible et les informations de service.

2. Dispositif de commande, comprenant : un récepteur (301), un transmetteur (302), une mémoire (303), et un processeur (304), dans lequel le récepteur (301), le transmetteur (302), et la mémoire (303) sont connectés séparément au processeur (304), la mémoire (303) stocke un code de programme, et le processeur (304) est configuré pour appeler le code de programme à exécuter les opérations suivantes :
recevoir une requête d'accès envoyée par une station de base spécifiée (203), la requête d'accès contenant un identifiant et des informations de service qui appartiennent à un équipement utilisateur (202), UE, qui a demandé d'accéder à la station de base spécifiée (203) ;
déterminer, selon des informations d'état de ressources pré-acquises de chaque station de base et les informations de service, une station de base cible et une ressource que la station de base cible devrait fournir à l'UE (202) ; et
envoyer une réponse d'accès à la station de base spécifiée (203), la réponse d'accès contenant l'identifiant de l'UE (202), un identifiant de la station de base cible, et la ressource, afin que la station de base spécifiée (203) transmette la réponse d'accès à l'UE (202) selon l'identifiant de l'UE (202), et lors de la réception de la réponse d'accès, l'UE (202) accédant à la station de base cible sur la base de l'identifiant de la station de base cible et à la ressource que la station de base cible fournit à l'UE (202),
l'étape consistant à déterminer, selon des informations d'état de ressources pré-acquises de chaque station de base et les informations de service, une station de base cible et une ressource que la station de base cible devrait fournir à l'UE (202) comprenant :
déterminer, par le dispositif de commande selon des informations d'état de ressources de la station de base spécifiée, si la station de base spécifiée peut fournir une ressource à l'UE ;
lors de la détermination que la station de base spécifiée peut fournir une ressource à l'UE, déterminer la station de base spécifiée comme la station de base cible, et déterminer la ressource selon les informations d'état de ressources de la station de base spécifiée et les informations de service ;
lors de la détermination que la station de base spécifiée ne peut pas fournir une ressource à l'UE, déterminer, selon des informations d'état de ressources d'une station de base à l'exception de la station de base spécifiée, une station de base qui peut fournir une ressource à l'UE comme la station de base cible, et déterminer la ressource selon les informations d'état de ressources de la station de base cible et les informations de service.

3. Procédé d'accès, comprenant :
recevoir (401), par un dispositif de commande, une requête d'accès envoyée par une station de base spécifiée, la requête d'accès contenant un identifiant et des informations de service qui appartiennent à un équipement utilisateur, UE, qui a demandé d'accéder à la station de base spécifiée ;
déterminer (402), par le dispositif de commande selon des informations d'état de ressources pré-acquises de chaque station de base et les informations de service, une station de base cible et une ressource que la station de base cible devrait fournir à l'UE ; et
envoyer (403), par le dispositif de commande, une réponse d'accès à la station de base spécifiée, la réponse d'accès contenant l'identifiant de l'UE, un identifiant de la station de base cible, et la ressource, afin que la station de base spécifiée transmette la réponse d'accès à l'UE selon l'identifiant de l'UE, et lors de la réception de la réponse d'accès, l'UE accédant à la station de base cible sur la base de l'identifiant de la station de base cible et à la ressource que la station de base cible fournit à l'UE, l'étape consistant à déterminer (402), par le dispositif de commande selon des informations d'état de ressources pré-acquises de chaque station de base et les informations de service, une station de base cible et une ressource que la station de base cible devrait fournir à l'UE comprenant :
déterminer, par le dispositif de commande selon des informations d'état de ressources de la station de base spécifiée, si la station de base spécifiée peut fournir une ressource à l'UE ;
lorsque le dispositif de commande détermine que la station de base spécifiée peut fournir une ressource à l'UE, déterminer la station de base spécifiée comme la station de base cible, et déterminer la ressource selon les informations d'état de ressources de la station de base spécifiée et les informations de service ;
lorsque le dispositif de commande détermine que la station de base spécifiée ne peut pas fournir une ressource à l'UE, déterminer, selon des informations d'état de ressources d'une station de base à l'exception de la station de base spécifiée, une station de base qui peut fournir une ressource à l'UE comme la station de base cible, et déterminer la ressource selon les informations d'état de ressources de la station de base cible et les informations de service.

4. Procédé selon la revendication 3, dans lequel des informations d'état de ressources d'une station de base comprennent une charge actuelle et un volume de ressources restantes, et l'étape consistant à déterminer, par le dispositif de commande selon des informations d'état de ressources de la station de base spécifiée, si la station de base spécifiée peut fournir une ressource à l'UE comprend :
déterminer, par le dispositif de commande, si une charge actuelle de la station de base spécifiée est inférieure à un premier seuil prédéfini, et lorsque la charge actuelle de la station de base spécifiée est inférieure au premier seuil prédéfini, déterminer que la station de base spécifiée peut fournir une ressource à l'UE ; ou
déterminer, par le dispositif de commande, si un volume de ressources restantes de la station de base spécifiée est supérieur à un deuxième seuil prédéfini, et lorsque le volume de ressources restantes de la station de base spécifiée est supérieur au deuxième seuil prédéfini, déterminer que la station de base spécifiée peut fournir une ressource à l'UE.

5. Procédé selon la revendication 3 dans lequel, lorsque le dispositif de commande détermine que la station de base spécifiée ne peut pas fournir une ressource à l'UE, l'étape consistant à déterminer, selon des informations d'état de ressources d'une station de base à l'exception de la station de base spécifiée, une station de base qui peut fournir une ressource à l'UE comme la station de base cible, comprend :
lorsque le dispositif de commande détermine que la station de base spécifiée ne peut pas fournir une ressource à l'UE, déterminer une station de base avec une charge actuelle la moins élevée dans la station de base à l'exception de la station de base spécifiée comme la station de base cible ; ou
lorsque le dispositif de commande détermine que la station de base spécifiée ne peut pas fournir une ressource à l'UE, déterminer une station de base avec un volume de ressources restantes maximal dans la station de base à l'exception de la station de base spécifiée comme la station de base cible.

6. Procédé selon la revendication 3, dans lequel l'étape consistant à envoyer, par le dispositif de commande, une réponse d'accès à la station de base spécifiée comprend :
lorsque la station de base cible est la station de base spécifiée, envoyer par le dispositif de commande, une première réponse d'accès à la station de base spécifiée, la première réponse d'accès contenant l'identifiant de l'UE, un identifiant de la station de base spécifiée, et une ressource que la station de base spécifiée devrait fournir à l'UE, et la première réponse d'accès étant utilisée pour accuser réception de la requête d'accès, afin que la station de base spécifiée transmette la première réponse d'accès à l'UE selon l'identifiant de l'UE, et lors de la réception de la première réponse d'accès, l'UE accédant à la station de base spécifiée sur la base de l'identifiant de la station de base spécifiée et à la ressource que la station de base spécifiée fournit à l'UE ; ou
lorsque la station de base cible est une première station de base à l'exception de la station de base spécifiée, envoyer, par le dispositif de commande, une deuxième réponse d'accès à la station de base spécifiée, la deuxième réponse d'accès contenant l'identifiant de l'UE, un identifiant de la première station de base, et une ressource que la première station de base devrait fournir à l'UE, afin que la station de base spécifiée transmette la deuxième réponse d'accès à l'UE selon l'identifiant de l'UE, et lors de la réception de la deuxième réponse d'accès, l'UE accédant à la première station de base sur la base de l'identifiant de la première station de base et à la ressource que la première station de base fournit à l'UE.

7. Procédé selon la revendication 3 dans lequel, après l'étape consistant à déterminer, par le dispositif de commande selon des informations d'état de ressources pré-acquises de chaque station de base et les informations de service, une station de base cible et une ressource que la station de base cible devrait fournir à l'UE, le procédé comprend en outre :
planifier, par le dispositif de commande, une ressource pour l'UE selon la ressource que la station de base cible devrait fournir à l'UE.

8. Procédé selon la revendication 3 dans lequel, après l'étape consistant à déterminer, par le dispositif de commande selon des informations d'état de ressources pré-acquises de chaque station de base et les informations de service, une station de base cible et une ressource que la station de base cible devrait fournir à l'UE, le procédé comprend en outre :
lorsque la station de base cible est la station de base spécifiée, inclure un identifiant de planification dans la première réponse d'accès afin que, lors de la réception de la première réponse d'accès, la station de base spécifiée planifie une ressource pour l'UE selon l'identifiant de l'UE et la ressource que la station de base spécifiée devrait fournir à l'UE ; ou
lorsque la station de base cible est une première station de base, envoyer, par le dispositif de commande, un message d'accès à la première station de base, le message d'accès contenant l'identifiant de l'UE et la ressource afin que, lors de la réception du message d'accès, la première station de base planifie une ressource pour l'UE selon l'identifiant de l'UE et la ressource que la première station de base devrait fournir à l'UE.

9. Procédé selon l'une quelconque des revendications 3 à 8, dans lequel la station de base spécifiée est une macro station de base ou une petite cellule.

10. Procédé selon la revendication 9 dans lequel, lorsque la station de base spécifiée est la macro station de base, avant l'étape consistant à recevoir une requête d'accès envoyée par une station de base spécifiée, le procédé comprend en outre :
lorsque la macro station de base reçoit une requête d'accès envoyée par l'UE et détermine, selon des informations d'état de ressources de la macro station de base, que la macro station de base ne peut pas fournir une ressource à l'UE, sélectionner un dispositif de commande selon des informations d'état de ressources acquises de chaque station de base pré-acquise par chaque dispositif de commande, et envoyer la requête d'accès au dispositif de commande sélectionné, le dispositif de commande sélectionné exécutant une étape de réception de la requête d'accès.

11. Procédé selon la revendication 9, dans lequel le dispositif de commande est situé dans une station de base connectée à la macro station de base.
